Europäisches Patentamt

(19) European Patent Office

Office européen des brevets

(11) Publication number: **0 286 566**
**A2**

(12) # EUROPEAN PATENT APPLICATION

(21) Application number: **88500037.2**

(22) Date of filing: **08.04.88**

(51) Int. Cl.⁴: **B 60 S 9/14**

(30) Priority: **10.04.87 ES 8701048**

(43) Date of publication of application:
**12.10.88 Bulletin 88/41**

(84) Designated Contracting States: **DE FR GB IT SE**

(71) Applicant: **Marcilla Vazquez, José Antonio**
**G. Franco, 94**
**Orense (ES)**

**Lopez Roqueiro, Manuel**
**Mateo de Prado, 7**
**Orense (ES)**

(72) Inventor: **Marcilla Vazquez, José Antonio**
**G. Franco, 94**
**Orense (ES)**

**Lopez Roqueiro, Manuel**
**Mateo de Prado, 7**
**Orense (ES)**

(74) Representative: **Urteaga Simarro, José Antonio**
**Gran Via, 86(6-5-5)**
**E-28013 Madrid (ES)**

(54) **System for lateral displacement of motor vehicles.**

㉗ This consists of a displacement train attached to the vehicle bottom and consisting of three telescopic units with wheels, of which one would have a drive and be steerable. Using a switch-distributor unit, the drive wheel can be turned, in the first instance, according to the manoeuvre to be carried out, then the telescopic units are dropped so as to raise the vehicle. The drive wheel can then be moved, so as to move the vehicle sideways, the telescopic units are once more folded and the car is parked.

EP 0 286 566 A2

## Description

## " SYSTEM FOR LATERAL DISPLACEMENT OF MOTOR VEHICLES "

### DECLARATION OF NOVELTY

It is well known by everybody the problem caused by the massive traffic in every city in the wrld. This circulatory chaos is overloaded because most of the vehicles see their running in time increased as a result of the lack of an empty space where to park. It is found many times, but it has not the neccesaru 40 or 50centimeters to accomplish that operation, choosing to leave it or looking for a bigger one, with the resulting waste of time and petrol, bad temper and so on, which means in practise... money.

To completely reduce this problem, that concerns everyone who, for pressing necessity, has to make daily use of the vehicle, it is why we have devised the SYSTEM FOR LATERAL DISPLACEMENT OF MOTOR VEHICLES.

As its name suggests, it consists of the use of series of elements, perfectly known and use by the present-day industry, arranged in a way that we can get the vehicle parked on the smallest space, and more.

The present SYSTEM let us successfully accomplish the parking drive.

### ADVANTAGES OF THE INVENTION

Among many others, we can underline the following:

1st.- It is widespread the knowledge of the risks that the parking drive involves as well as the high costs that either private individuals or Insurance Companies have to bear for the damages caused as a result of an incorrect driving, which causes: breaking of rear lights, headkights, hubcaps, bumpers, dents, and so on.With this SYSTEM the above problem totally dessapears.

2nd.- Aminimum space is needed for paking. This space is, at the most, the length of the vehicle.

3rd.- As a result of the above, the parking areas would considerably increase since many more vehicles would park in the same space where a lot less ones park today. With that, the users themselves apart, the city councils would be favoured and also the owners of the parking places, either on the surface or in the underground.

4th.- The driving is extremely simple because it does not involve any technique that includes a complex learning by the driver.

5.- More speed is also obtained in the execution of the operation because, not being neccessary the forward and backwards displacements, the time expent on the execution of this is gained.

6th.- The parking drives that are got are "perfect". We can leave the vehicle, if we like, with the wheels touching the pavement. As a result, it is avoided the parking operations with a wheel being 5 centimeters from the pavement and the other 50 centimeters.

7.- Due to less time needed to operate the driving, two advantages are obtained as follows:

a.-Saving of fuel.

b.- Reduction of pollution.

8th.- Other of the advantages is that you can carry out the following operations:

a.- To change the punctured wheel.

b.- To change at the same time new wheels for worn out ones.

c.- To place snow chains without need of using the "jack".

9th.- The installation cost of the SYSTEM is minimal because the components of the same vehicle are used without reducing their normal life. Those to be fitted are national and therefore they cut the purchase price--- They do not come from the facto ry so far.

10th.-The maintenance cost is null as it is explained int he paragraph above and, at the same time, because you do not demand it an extra work but what you obtain is to reduce that it was making until know.

11th.- About the wheels that form the SYSTEM, only one of them is motive and with a 360° turning circle which gives it the power to carry out any tipe of operation and, at the same time, to reduce the cost of tje SYSTEM.

12th.-This advantage is the consequence of all the previous ones and it takes us to the conclusion that with the use of this SYSTEM, the number of car sales would be increased because the main reason the potencial buyers are arguing is that they do not have the needed skill to carry out this type of operation.

### COMPLETE DESCRIPTION OF THE PARTS OF THE SYSTEM AND THEIR OPERATION.

#### 1st.- ASSEMBLY. OPERATION AND PARTS:

1st. a.- The SYSTEM as a whole consists of a displacement train perfectly anchoraged to the basic structure of the vehicle to obtain its displacement to where it is wanted.

#### 1st. b.- OPERATION.

The SYSTEM operates so:
Once the vehicle brought near the parking space and keeping the motor ignited, in "neutral", and actuating the hand brake, you select with the SWITCHER-DISTRIBUTOR(pag. 1/3 and 2/3 A), in the number 1 position of STOP ( pag. 2/3 A-1) the number of the needed degrees to -carry out the operation: 90° if we park to the right or 270° if we do it to the left (pag. 2/3 A).Then we put the SWITCHER-DISTRIBUTOR (pag. 1/3 and 2/3 A) in the position 2 (pag. 2/3 A-2) by which the DISPLACEMENT TRAIN (pag. 1/3 and 3/3 R-M, R-F and R-P)goes down not with the motive wheel (pag. 1/3 and 3/3 R-M), pointed where it has to desplace the vehicle,being this one lifted at that moment.

Next we insert the position 3 of the SWITCHER-DISTRIBUTOR(pag. 2/3 A-3) in which the motive wheel turns, displacing the vehicle, towards the previously selected position in number 1 (pag. 2/3 (A-1). If the selection of the number of degrees ---chosen by the driver in the number 1 --- was not the suitable, you will be able to modify it, on the way, in this position number 3.

Finished the operation, we will pass the SWITCHER-DISTRIBUTOR to the position 1 (pag. 2/3 A-1) which is that of STOP; in this position the displacement train goes up, leaving the vehicle free and perfectly parked.

To drive out of the parking place and once the motor ignited, in "neutral", and with the hand brake actuated, we select, with the SWITCHER-DISTRIBUTOR in the position 1(pag. 2/3 A-1),270° if the vehicle is parked on the right or 90° if it is on the left (pag. 2/3 A).Afterwards, we insert the position 2 (pag 2/3 A-2) of the SWITCHER-DISTRIBUTOR in which the vehicle is lifted. Lifted this one,we pass the SWITCHER-DISTRIBUTOR to the position 3(pag. 2/3 A-3) in which the vehicle is displaced, going neatly out of the parking place as a result of the force exerted on the motive wheel.Once out, we will put the SWITCHER-DISTRIBUTOR in the position 1, which is that of STOP(pag. 2/3 A-1)being the DISPLACEMENT TRAIN taken in a position to start its driving.

1st.- c.- PARTS OF THE SYSTEM.

They are as follows:
displacement train(pag, 1/3 R- M, R-F andR-P ), pressure pump(pag. 1/3 C), power supply(pag. 1/3 from B to C) and switcher distributor (pag. 1/3 and 2/3A).

1st. c a.- DISPLACEMENT TRAIN.

There is a mathematical principel that says: "Threes no-aligned points always meet in the same place". Based on this principle, we come to the conclusion that the DISPLACEMENT TRAIN must have three points of support so that the vehicle never loses stability and, therefore, the motive wheel never stops being in contact with the road.

In accordance with the above, the DISPLACEMENT TRAIN consists of the following parts:

a- Three telescopic pistons that carry out the lifting function of the vehicle (pag 3/3).

b-Three solid, rubber wheels that will be placed ,each one of them, at the end of their respective support(pag 3/3 R-M , R-F and R-P). One of the three is the motive wheel(pag3/3 R-M) with a 360° turning circle (pag. 2/3 A).This wheel will be aproximatly placed in accordance with that shown on the page 1/3. The other two are fixed and they will be aproximately situated in the place told in the page 1/3 R-F and R-P.

The joining of the DISPLACEMENT TRAIN with the vehicle will depend on the basic structure of the same. In any case this one and the DISPLACEMENT TRAIN will form a solid whole.

1st. c b.- PRESSURE PUMP.

It will be situated in such a way (pag. 1/3 C) that exerts, on each one of the three telescopy pistons(pag.3/3 R-M R-P and R-F) the neccesaru pressure to lift the vehicle sliks, so in this way to leep it always horizontally in relation to the road.

1st. c c.- POWER SUPPLY

T he power supply(pag 1/3 from B to C)is carried out through the crankshaft (pag. 1/3 B) prior order of the SWITCHER DISTRIBUTOR that we pass to describe in the following paragraph.

1st. c d.- SWITCHER DISTRIBUTOR

It will be situated in an accesible place for the driver from the driving seat (pag. 1/3 A).

As its compound name suggests, it has two missios:

1 - SWITCHER because it serves to interrupt or establish the neede electric current in order tht the displacement train goes up and down.

2 - DISTRIBUTOR since it disposes the carrying out of the movements previously chosen by the driver for the execution of the operation.

The Switcher-distributor has several positios as they were specified in the pages 4 and 5 of this REPORT. In spite of it,we are going on to repeat them.

Position number 1.

In this one, the SWITCHER works as STOP (pag. 2/3 A-1) and the DISTRIBUTOR works as selector of the neccesary degrees (pag. 2/3 A) so that the motive wheel (pag. 1/3 and 3/3 R-M) takes the direction previously selected by the DISTRIbutor.

Position number 2.

In it, the displacement train goes down, with the motive wheel positioned, to lift the vehicle. This will only take place when, at the same time, the vehicle is in the following conditions:

a - Actuated the hand brake.

b - The motor ignited.

c - In neutral. If one of these were missed,the DISPLACEMENT TRAIN would not go down even though the SWITCHER-DISTRIBUTOR is switched in the position number 2.

Position number 3.

It is which the power transmited from the crankshat (pag. 1/3 B) is applied to the motive wheel (pag. 1/3 and 3/3 R-M). In this position number 3, the chosen degrees in the position number 1 (pag. 2/3 A-1) can also be corrected by the way.

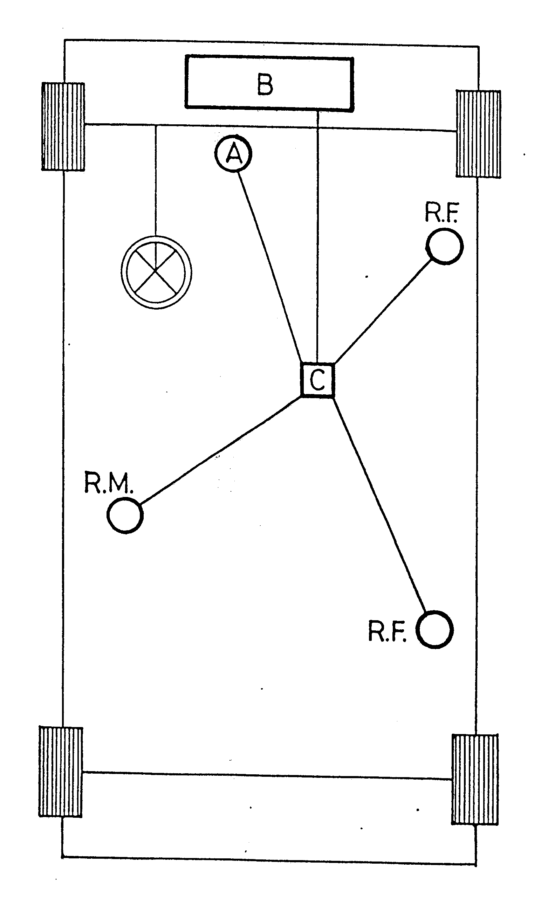

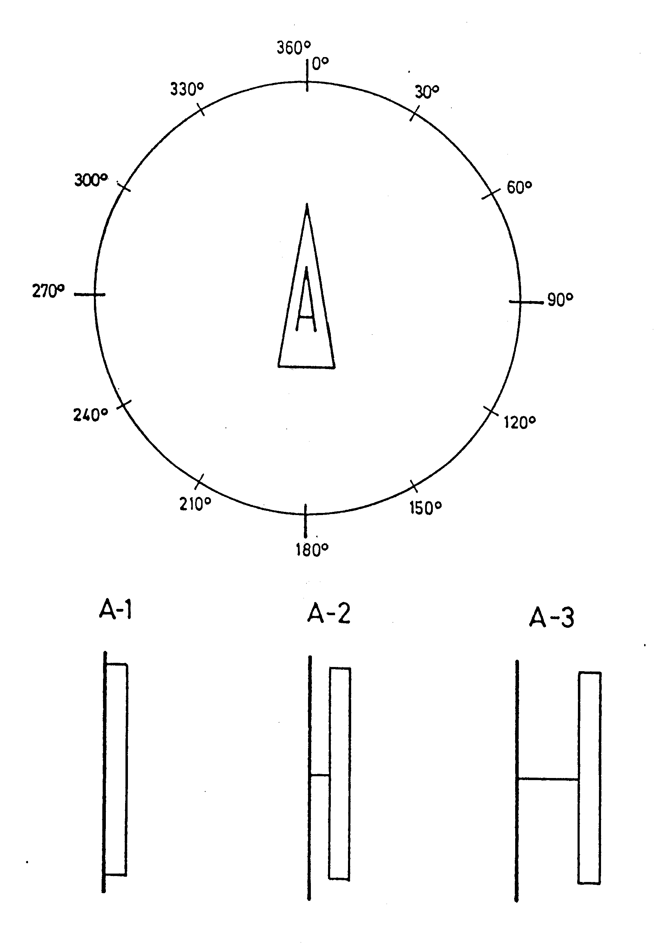

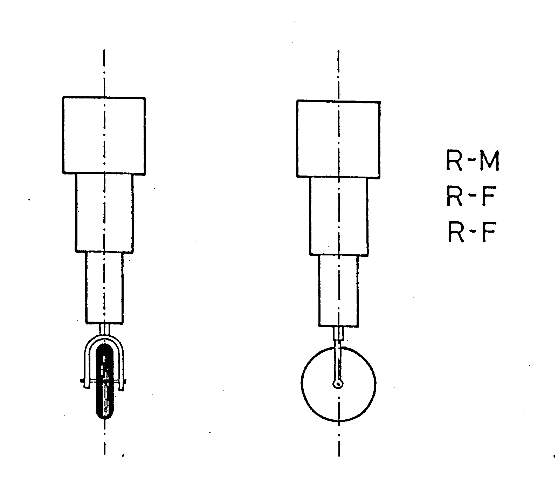

**Claims**

1st.) SYSTEM FOR LATERAL DISPLACEMENT OF MOTOR VEHICLES, that a serious problem troubling most of the present society is the bad use of the parking spaces for vehicles due to the missing of a siutable System that allows a better use of them. So, we have conceived this "system" that we call SYSTEM FOR LATERAL DISPLACEMENT OF MOTOR VEHICLES.

2nd.) SYSTEM FOR LATERAL DISPLACEMENT OF MOTOR VEHICLES, according to the first claim is characterized because it is composed by the following parts: DISPLACEMENT TRAIN, PRESSURE PUMP,,POWER SUPPLY, and SWITCHER-DISTRIBUTOR.

3rd.) SYSTEM FOR LATERAL DISPLACEMENT OF MOTOR VEHICLES,according to above claims, consists in using the needed power of the motor of the vehicle obtained by a power supply from the crankshaft, so once transmited this to a pressure pump exerts it proportionally to every one of the pistons of the displacement train to keep it allways on the horizontal over the road. There are three pistons.

4th.) SYSTEM FOR LATERAL DISPLACAMENT OF MOTOR VEHICLES, according to above claims is characterized because the pressure exerted on the displacement train allows the lifting of the vehicle which once lifted and according to the indtructions transmited by the switcher-distributor, makes possible that that one be laterally displaced by the power that its only motive wheels imparts.

5th.) SYSTEM FOR LATERAL DISPLACEMENT OF MOTOR VEHICLES, according to above claims the switcher-distributor has three positions,The number one at the same time works as STOP and selector of the number of necessary degrees to carry out the operation. The number two transmits the order to the displacement train to go down and, as a result, the vehicle goes up. The position number three sets in motion the only motive wheel whose turning circle is 360°. The other two wheels are fixed.

6th.) LAST CLAIM. "SYSTEM FOR LATERAL DISPLACAMENT OF MOTOR VEHICLES".

reference DE/K-112

0286566

reference DE/K-112

0286566

A-1      A-2      A-3

reference DE/K-112

0286566

R-M
R-F
R-F